# EUROPÄISCHE PATENTSCHRIFT

(11) **EP 3 165 394 B1**
(45) Veröffentlichungstag und Bekanntmachung des Hinweises auf die Patenterteilung: **27.02.2019**
(21) Anmeldenummer: 16193514.3
(22) Anmeldetag: 12.10.2016
(51) Int. Cl.: B60K 17/28

(54) **ANTRIEBSSYSTEM FÜR EIN FAHRZEUG**
DRIVE SYSTEM FOR A VEHICLE
GROUPE PROPULSEUR DE VÉHICULE

(30) Priorität: 05.11.2015 AT 509432015
(43) Veröffentlichungstag der Anmeldung: 10.05.2017
(73) Patentinhaber: AVL Commercial Driveline & Tractor Engineering GmbH, 4400 Steyr (AT)
(72) Erfinder: INFANGER, Stefan, 4443 MARIA NEUSTIFT (AT)
(74) Vertreter: Babeluk, Michael

(56) Entgegenhaltungen:
- EP-A1- 2 153 087
- EP-A2- 1 473 183
- EP-A2- 2 607 129
- DE-A1-102009 046 974
- GB-A- 2 493 961

## Beschreibung

Die Erfindung betrifft ein Antriebssystem für ein Fahrzeug, mit einer eine Primärantriebswelle aufweisenden Primärmaschine, welche mit einem Hauptantriebsstrang und einem Nebenantriebstrang antriebsverbindbar ist, wobei im Nebenantriebsstrang ein Planetengetriebe angeordnet ist, welches zumindest eine mit der Primärmaschine verbundene oder verbindbare Nebenantriebswelle, eine mit zumindest einer Sekundärmaschine verbundene oder verbindbare Sekundärantriebswelle und eine mit einer Zapfwelle verbundene oder verbindbare Nebenabtriebswelle aufweist, wobei die mit der Primärmaschine verbundene oder verbindbare Nebenantriebswelle über zumindest eine erste Bremseinrichtung abbremsbar ist. Weiters betrifft die Erfindung ein Verfahren zum Betreiben dieses Antriebssystems.

Landwirtschaftliche Fahrzeuge wie Traktoren oder dergleichen sind üblicherweise mit Zapfwelleneinheiten (PTO = Power Take Off) zum Antrieb von Arbeitsgeräten ausgestattet. Derartige Zapfwelleneinheiten bestehen üblicherweise aus zwei bis vier mechanischen Zahnradstufen um verschiedene Zapfwellendrehzahlen für unterschiedliche Anwendungen und Arbeitsgeräte bereitzustellen. Diese Drehzahlen hängen aufgrund der mechanischen Antriebsverbindung unmittelbar von der Drehzahl der im Allgemeinen als Brennkraftmaschine ausgebildeten Primärmaschine ab.

Die WO 2012/110617 A1 beschreibt eine Zapfwelleneinheit wobei eine als Verstellpumpe ausgebildete lastsensitive Pumpe in Kombination mit einem Hydraulikmotor verwendet wird, um unterschiedliche Drehzahlen an der Zapfwelle bereitzustellen. Allerdings ist der Bereich unterschiedlicher Drehzahlen durch die Anordnung sehr eingeschränkt.

Die GB 2 493 961 A offenbart ein gattungsgemäßes Antriebssystem und Verfahren für einen Traktor, wobei in einem Nebenantriebsstrang ein Planetengetriebe angeordnet ist. Das Antriebssystem weist eine mit einer Sekundärmaschine verbundene Sekundärantriebswelle und eine mit einer Zapfwelle verbundene Nebenabtriebswelle auf. Die Nebenantriebswelle ist über eine Bremseinrichtung abbremsbar.

Aufgabe der Erfindung ist es, diesen Nachteil zu vermeiden und auf möglichst einfache Weise eine hohe Drehzahlflexibilität für die Zapfwelle bereitzustellen. Eine weitere Aufgabe ist es, auf einfache Weise einen alternativen Antrieb zur Verfügung zu stellen.

Erfindungsgemäß erfolgt dies dadurch, dass die Nebenabtriebswelle über eine zweite Bremseinrichtung abbremsbar ist, und die Primärmaschine über eine erste Schaltkupplung mit dem Hauptantriebsstrang und über eine zweite Schaltkupplung mit dem Nebenantriebsstrang antriebsverbindbar ist, wobei die Nebenantriebswelle über zumindest eine dritte Schaltkupplung mit dem Hauptantriebsstrang antriebsverbindbar ist.

Dabei kann in zumindest einem ersten Betriebsbereich des Fahrzeugs die Nebenantriebswelle des Planetengetriebes durch eine erste Bremseinrichtung abgebremst, insbesondere festgehalten werden, und in zumindest einem zweiten Betriebsbereich des Fahrzeugs die Abtriebswelle des Planetengetriebes durch eine zweite Bremseinrichtung abgebremst, insbesondere festgehalten werden. Dies ermöglicht eine hohe Variabilität in der Betriebsweise.

Die ersten und die zweiten Schaltkupplungen können als Reibkupplungen, insbesondere als Doppelkupplung, ausgebildet sein. Die dritte Schaltkupplung kann in einfacher Weise als Klauenkupplung ausgebildet sein.

Dadurch kann in zumindest einem Betriebsbereich des Fahrzeugs, vorzugsweise dem zweiten Betriebsbereich, die Primärmaschine über eine erste Schaltkupplung vom Nebenantriebsstrang und/oder über eine zweite Schaltkupplung vom Hauptantriebsstrang getrennt werden.

Das Fahrzeug kann dabei direkt zumindest teilweise, insbesondere ausschließlich, über die Sekundärmaschine angetrieben werden, wenn der Nebenantriebsstrang über eine dritte Schaltkupplung mit dem Hauptantriebsstrang verbunden wird.

Die Sekundärmaschine kann durch einen Hydraulikmotor oder einen Elektromotor gebildet sein.

Als Bremseinrichtung kann beispielsweise eine Reibungsbremse eingesetzt werden. Dies ermöglicht es, durch schlupfenden Betrieb ein variables Bremsmoment auf die erste Antriebswelle oder die Abtriebswelle aufzubringen. In einer besonders einfachen Ausführung ist vorgesehen, dass zumindest eine Bremseinrichtung als Klauenkupplung ausgebildet ist.

Die Erfindung wird im Folgenden anhand der nicht einschränkenden Figuren näher erläutert. Darin zeigen schematisch:
- Fig. 1: ein erfindungsgemäßes Antriebssystem in einer ersten Ausführungsvariante; und
- Fig. 2: ein erfindungsgemäßes Antriebssystem in einer zweiten Ausführungsvariante.

Die Figuren zeigen jeweils ein Antriebssystem 10 für ein Fahrzeug. Das Antriebssystem 10 weist eine - beispielsweise durch eine Brennkraftmaschine gebildete - Primärmaschine 12 auf, welche über eine Primärantriebswelle 11 eine erste Schaltkupplung 13 und eine zweite Schaltkupplung 14 mit einem Hauptantriebsstrang 15 zum Antrieb einer Hinterachse 16 bzw. Vorderachse 17 des Fahrzeuges und/oder einem Nebenantriebstrang 18 zum Antrieb einer Zapfwelle 19 (PTO-An trieb) verbunden werden kann. Die erste Schaltkupplung 13 und zweite Schaltkupplung 14 können als Doppelkupplung 134 ausgebildet sein, wie in den Figuren gezeigt ist.

Im Hauptantriebsstrang 15 ist ein als Mehrgruppengetriebe 20 ausgebildetes Schaltgetriebe angeordnet, wobei das Mehrgruppengetriebe 20 ein Hauptgetriebe 21 für mehrere Gangstufen 1, 2, 3, 4, ein nachgeschaltetes Bereichsgruppengetriebe 22 für zwei unterschiedliche Übersetzungsbereiche H bzw. L und eine vorgeschalteten Umkehrstufe 23 für Vorwärtsfahrt F und Rückwärtsfahrt R aufweist
Im Nebenantriebsstrang 18 ist zwischen der zweiten Schaltkupplung 14 und der Zapfwelle 19 ein Planetengetriebe 25 angeordnet. Das beispielsweise als Dreiwellengetriebe - mit den Elementen Sonnenrad, Planetenträger und Hohlrad - ausgeführte Planetengetriebe 25 weist eine mit der Primärmaschine 12 verbindbare Nebenantriebswelle 24, eine mit einer Sekundärmaschine 26 verbundene zweite Sekundärantriebswelle 27 und eine mit der Zapfwelle 19 verbundene Nebenabtriebswelle 28 auf. Dabei sind Nebenantriebswelle 24, Sekundärantriebswelle 27 und Nebenabtriebswelle 28 mit unterschiedlichen Elementen des Planetengetriebes 25 verbunden. Die Nebenantriebswelle 24 kann über eine erste Bremseinrichtung 29 abgebremst, bzw. festgehalten werden. Weiters ist zum Abbremsen bzw. Festhalten der Nebenabtriebswelle 28 eine zweite Bremseinrichtung 30 vorgesehen.

Der Hauptantriebsstrang 15 und der Nebenantriebsstrang 18 können direkt - unter Umgehung der Doppelkupplung 134 - über eine Getriebestufe 31 und eine dritte Schaltkupplung 32 miteinander antriebsverbunden werden. Auf diese Weise ist es möglich, die Sekundärmaschine 26 ausschließlich zum Antrieb des Fahrzeuges einzusetzen.

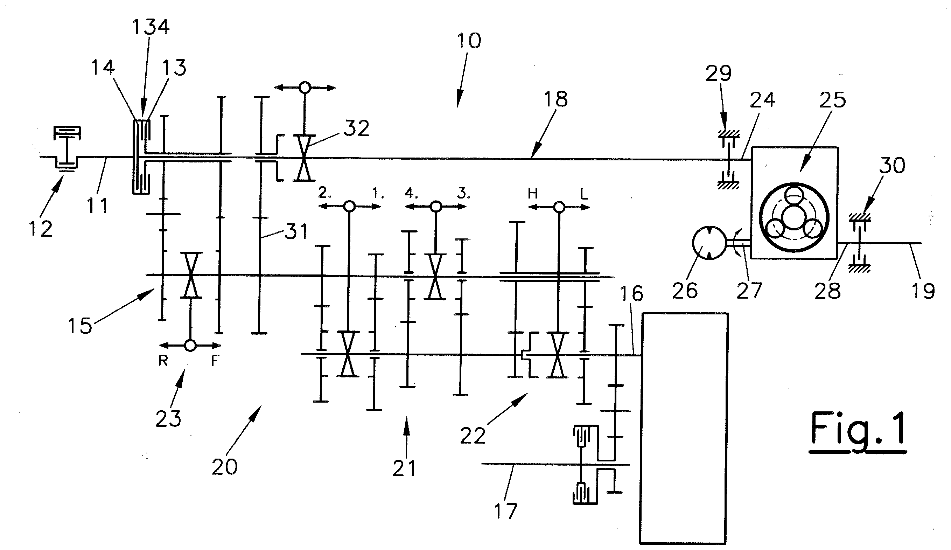

Fig. 1 zeigt eine erste Ausführungsvariante der Erfindung, bei der die Sekundärmaschine 26 als Hydromotor ausgebildet ist, mit welchem ein Antriebsmoment, oder aber ein Bremsmoment aufgebracht werden kann.

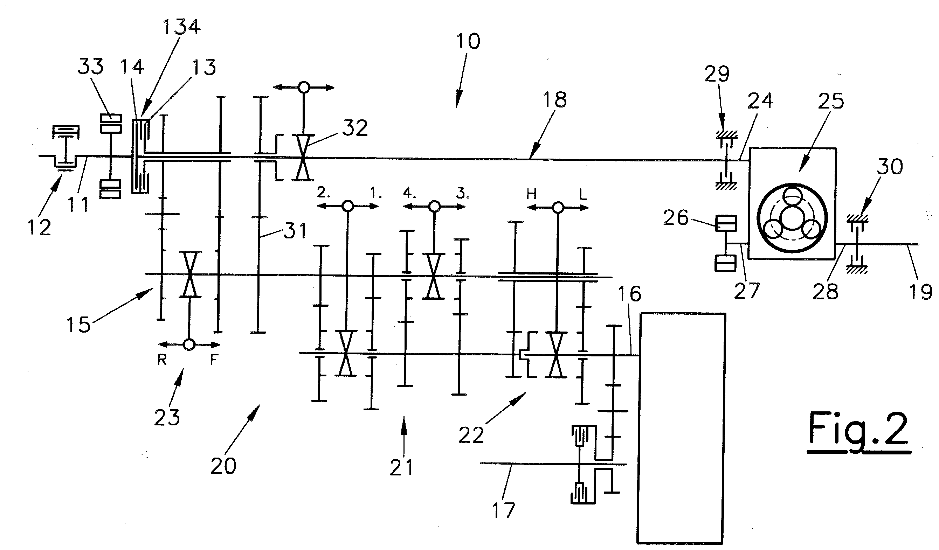

Bei der in Fig. 2 dargestellten zweiten Ausführungsvariante der Erfindung ist die Sekundärmaschine 26 dagegen als Elektromotor ausgebildet. Dabei kann eine weitere elektrische Maschine 33 mit der Primärantriebswelle 11 antriebsverbunden sein. Die weitere elektrische Maschine 33 kann motorisch oder generatorisch betrieben werden, und somit ein zusätzliches Antriebs- oder Bremsmoment auf die Primärantriebswelle 11 aufbringen.

Mit der beschriebenen Anordnung lassen sich unter Anderem folgende Betriebsweisen verwirklichen:
A) Antrieb des Fahrzeuges nur über Primärmaschine 12 ohne PTO-Antrieb:

| | |
|---|---|
| Primärmaschine 12: | aktiviert |
| Sekundärmaschine 26: | deaktiviert |
| Erste Schaltkupplung 13: | geschlossen |
| Zweite Schaltkupplung 14: | geöffnet |
| Dritte Schaltkupplung 32: | geöffnet |
| Erste Bremseinrichtung 29: | - |
| Zweite Bremseinrichtung 30: | - |

B) Antrieb des Fahrzeuges nur über Primärmaschine 12 mit PTO-Antrieb über Primärmaschine 12 und Sekundärmaschine 26:

| | |
|---|---|
| Primärmaschine 12: | aktiviert |
| Sekundärmaschine 26: | aktiviert |
| Erste Schaltkupplung 13: | geschlossen |
| Zweite Schaltkupplung 14: | geschlossen |
| Dritte Schaltkupplung 32: | geöffnet |
| Erste Bremseinrichtung 29: | deaktiviert |
| Zweite Bremseinrichtung 30: | deaktiviert |

C) Antrieb des Fahrzeuges nur über Primärmaschine 12 mit PTO-Antrieb nur über Sekundärmaschine 26 :

| | |
|---|---|
| Primärmaschine 12: | aktiviert |
| Sekundärmaschine 26: | aktiviert |
| Erste Schaltkupplung 13: | geschlossen |
| Zweite Schaltkupplung 14: | geöffnet |
| Dritte Schaltkupplung 32: | geöffnet |
| Erste Bremseinrichtung 29: | aktiviert |
| Zweite Bremseinrichtung 30: | deaktiviert |

D) PTO-Antrieb bei stillstehendem Fahrzeug über Primärmaschine 12 und Sekundärmaschine 26 :

| | |
|---|---|
| Primärmaschine 12: | aktiviert |
| Sekundärmaschine 26: | aktiviert |
| Erste Schaltkupplung 13: | geöffnet |
| Zweite Schaltkupplung 14: | geschlossen |
| Dritte Schaltkupplung 32: | geöffnet |
| Erste Bremseinrichtung 29: | deaktiviert |
| Zweite Bremseinrichtung 30: | deaktiviert |

E) PTO-Antrieb bei stillstehendem Fahrzeug nur über Sekundärmaschine 26 :

| | |
|---|---|
| Primärmaschine 12: | deaktiviert |
| Sekundärmaschine 26: | aktiviert |
| Erste Schaltkupplung 13: | - |
| Zweite Schaltkupplung 14: | geöffnet |
| Dritte Schaltkupplung 32: | geöffnet |
| Erste Bremseinrichtung 29: | aktiviert |
| Zweite Bremseinrichtung 30: | deaktiviert |

F) Antrieb des Fahrzeuges nur über Sekundärmaschine 26 ohne PTO-Antrieb:

| | |
|---|---|
| Primärmaschine 12: | deaktiviert |
| Sekundärmaschine 26: | aktiviert |
| Erste Schaltkupplung 13: | geöffnet |
| Zweite Schaltkupplung 14: | geöffnet |
| Dritte Schaltkupplung 32: | geschlossen |
| Erste Bremseinrichtung 29: | deaktiviert |
| Zweite Bremseinrichtung 30: | aktiviert |

G) Antrieb des Fahrzeuges über Primärmaschine 12 und Sekundärmaschine 26 ohne PTO-Antrieb:

| | |
|---|---|
| Primärmaschine 12: | aktiviert |
| Sekundärmaschine 26: | aktiviert |
| Erste Schaltkupplung 13: | geöffnet/geschlossen/geschlossen |
| Zweite Schaltkupplung 14: | geschlossen/geöffnet/geschlossen |
| Dritte Schaltkupplung 32: | geschlossen/geschlossen/geöffnet |
| Erste Bremseinrichtung 29: | deaktiviert |
| Zweite Bremseinrichtung 30: | aktiviert |

H) Antrieb des Fahrzeuges über Primärmaschine 12 und Sekundärmaschine 26 mit PTO-Antrieb:

| | |
|---|---|
| Primärmaschine 12: | aktiviert |
| Sekundärmaschine 26: | aktiviert |
| Erste Schaltkupplung 13: | geöffnet/geschlossen/geschlossen |
| Zweite Schaltkupplung 14: | geschlossen/geöffnet/geschlossen |
| Dritte Schaltkupplung 32: | geschlossen/geschlossen/geöffnet |
| Erste Bremseinrichtung 29: | deaktiviert |
| Zweite Bremseinrichtung 30: | teilweise aktiviert |

"Erste bzw. Zweite Bremseinrichtung 29 bzw. 30 aktiviert" bedeutet, dass die entsprechende Nebenantriebswelle 24 bzw. Nebenabtriebswelle 28 abgebremst oder festgehalten wird. "Sekundärmaschine 26 aktiviert" bedeutet, dass ein Antriebsmoment oder ein Bremsmoment durch die Sekundärmaschine 26 aufgebracht wird.

## Patentansprüche

1. Antriebssystem (10) für ein Fahrzeug, mit einem Hauptantriebsstrang (15) und einem Nebenantriebstrang (18) und einer eine Primärantriebswelle (11) aufweisenden Primärmaschine (12), welche mit dem Hauptantriebsstrang (15) und dem Nebenantriebstrang (18) antriebsverbindbar ist, wobei im Nebenantriebsstrang (18) ein Planetengetriebe (25) angeordnet ist, welches zumindest eine mit der Primärmaschine (12) verbundene oder verbindbare Nebenantriebswelle (24), eine mit zumindest einer Sekundärmaschine (26) verbundene oder verbindbare Sekundärantriebswelle (27) und eine mit einer Zapfwelle (19) verbundene oder verbindbare Nebenabtriebswelle (28) aufweist, wobei die mit der Primärmaschine (12) verbundene oder verbindbare Nebenantriebswelle (24) über zumindest eine erste Bremseinrichtung (29) abbremsbar ist, **dadurch gekennzeichnet, dass** die Nebenabtriebswelle (28) über zumindest eine zweite Bremseinrichtung (30) abbremsbar ist, die Primärmaschine (12) über eine erste Schaltkupplung (13) mit dem Hauptantriebsstrang (15) und über eine zweite Schaltkupplung (14) mit dem Nebenantriebsstrang (18) antriebsverbindbar ist, wobei die Nebenantriebswelle (24) über zumindest eine dritte Schaltkupplung (32) mit dem Hauptantriebsstrang (15) antriebsverbindbar ist.

2. Antriebssystem (10) nach Anspruch 1, **dadurch gekennzeichnet, dass** die Sekundärmaschine (26) durch einen Hydraulikmotor gebildet ist (Fig. 1).

3. Antriebssystem (10) nach Anspruch 1, **dadurch gekennzeichnet, dass** die Sekundärmaschine (26) durch einen Elektromotor gebildet ist (Fig. 2).

4. Antriebssystem (10) nach einem der Ansprüche 1 bis 3, **dadurch gekennzeichnet, dass** zumindest eine Bremseinrichtung (29, 30) als Reibungsbremse, vorzugsweise als Scheibenbremse, ausgebildet ist.

5. Antriebssystem (10) nach einem der Ansprüche 1 bis 4, **dadurch gekennzeichnet, dass** zumindest eine Bremseinrichtung (29, 30) als Klauenkupplung ausgebildet ist.

6. Antriebssystem (10) nach einem der Ansprüche 1 bis 5, **dadurch gekennzeichnet, dass** die erste und die zweite Schaltkupplung (13, 14) als Reibkupplungen ausgebildet sind.

7. Antriebssystem (10) nach einem der Ansprüche 1 bis 6, **dadurch gekennzeichnet, dass** die dritte Schaltkupplung (32) als Klauenkupplung ausgebildet ist.

8. Verfahren zum Betreiben eines Antriebssystems (10) für ein Fahrzeug, mit einer eine Primärantriebswelle (11) aufweisenden Primärmaschine (12), welche mit einem Hauptantriebsstrang (15) und einem Nebenantriebstrang (18) antriebsverbindbar ist, wobei im Nebenantriebsstrang (18) ein Planetengetriebe (25) angeordnet ist, welches zumindest eine der Primärmaschine verbundene oder verbindbare Nebenantriebswelle (24), eine mit zumindest einer Sekundärmaschine (26) verbundene oder verbindbare Sekundärantriebswelle (27) und eine mit einer Zapfwelle (19) verbundene oder verbindbare Nebenabtriebswelle (28) aufweist, **dadurch gekennzeichnet, dass** in zumindest einem ersten Betriebsbereich des Fahrzeugs die Nebenantriebswelle (24) des Planetengetriebes (25) durch eine erste Bremseinrichtung (29) abgebremst, vorzugsweise festgehalten wird, dass in zumindest einem zweiten Betriebsbereich des Fahrzeugs die Nebenabtriebswelle (28) des Planetengetriebes (25) durch eine zweite Bremseinrichtung (30) abgebremst, vorzugsweise festgehalten wird, dass in zumindest einem Betriebsbereich des Fahrzeugs die Primärmaschine (12) über eine erste Schaltkupplung (13) vom Hauptantriebsstrang (15) und/oder über eine zweite Schaltkupplung (14) vom Nebenantriebsstrang (18) getrennt wird, und dass in zumindest einem Betriebsbereich des Fahrzeugs der Nebenantriebsstrang (18) über eine dritte Schaltkupplung (32) mit dem Hauptantriebsstrang (15) verbunden wird.

9. Verfahren nach Anspruch 8, **dadurch gekennzeichnet, dass** in dem zweiten Betriebsbereich die Primärmaschine (12) über eine erste Schaltkupplung (13) vom Hauptantriebsstrang (15) und/oder über eine zweite Schaltkupplung (14) vom Nebenantriebsstrang (18) getrennt wird.

10. Verfahren nach Anspruch 8 oder 9, **dadurch gekennzeichnet, dass** in dem zweiten Betriebsbereich, der Nebenantriebsstrang (18) über eine dritte Schaltkupplung (32) mit dem Hauptantriebsstrang (15) verbunden wird.

## Claims

1. Drive system (10) for a vehicle, comprising a main drive train (15), an auxiliary drive train (18) and a primary machine (12) which has a primary drive shaft (11) and can be drive-connected to the main drive train (15) and the auxiliary drive train (18), wherein a planetary gear (25) is arranged in the auxiliary drive train (18), which planetary gear (25) has at least one auxiliary drive shaft (24) connected or connectable to the primary machine (12), an auxiliary drive shaft (27) connected or connectable to at least one secondary machine (26) and an auxiliary output shaft (28) connected or connectable to a power take-off shaft (19), wherein the auxiliary drive shaft (24) connected or connectable to the primary machine (12) can be braked via at least one first braking device (29), **characterised in that** the auxiliary output shaft (28) can be braked via at least one second braking device (30), the primary machine (12) can be drive-connected to the main drive train (15) via a first shift clutch (13) and to the auxiliary drive train (18) via a second shift clutch (14), wherein the auxiliary drive shaft (24) is drive-connectable to the main drive train (15) via at least one third shift clutch (32).

2. Drive system (10) according to claim 1, **characterised in that** the secondary machine (26) is formed by a hydraulic motor (Fig. 1).

3. Drive system (10) according to claim 1, **characterised in that** the secondary machine (26) is formed by an electric motor (Fig. 2).

4. Drive system (10) according to one of claims 1 to 3, **characterised in that** at least one braking device (29, 30) is designed as a friction brake, preferably as a disc brake.

5. Drive system (10) according to one of claims 1 to 4, **characterised in that** at least one braking device (29, 30) is designed as a claw clutch.

6. Drive system (10) according to one of claims 1 to 5, **characterised in that** the first and second shift clutches (13, 14) are designed as friction clutches.

7. Drive system (10) according to one of claims 1 to 6, **characterised in that** the third shift clutch (32) is designed as a claw clutch.

8. Method for operating a drive system (10) for a vehicle, comprising a primary machine (12) which has a primary drive shaft (11) and can be drive-connected to a main drive train (15) and an auxiliary drive train (18), wherein a planetary gear (25) is arranged in the auxiliary drive train (18), which planetary gear (25) has at least one auxiliary drive shaft (24) connected or connectable to the primary machine, an auxiliary drive shaft (27) connected or connectable to at least one secondary machine (26) and an auxiliary output shaft (28) connected or connectable to a power take-off shaft (19), **characterised in that** in at least one first operating range of the vehicle the auxiliary drive shaft (24) of the planetary gear (25) is braked, preferably retained, by a first braking device (29), that in at least one second operating range of the vehicle the auxiliary output shaft (28) of the planetary gear (25) is braked, preferably retained, by a second braking device (30), that in at least one operating range of the vehicle the primary machine (12) is separated from the main drive train (15) via a first shift clutch (13) and/or from the auxiliary drive train (18) via a second shift clutch (14), and that in at least one operating range of the vehicle the auxiliary drive train (18) is connected to the main drive train (15) via a third shift clutch (32).

9. Method according to claim 8, **characterised in that** in the second operating range the primary machine (12) is separated from the main drive train (15) via a first shift clutch (13) and/or from the auxiliary drive train (18) via a second shift clutch (14).

10. Method according to claim 8 or 9, **characterised in that** in the second operating range the auxiliary drive train (18) is connected to the main drive train (15) via a third shift clutch (32).

## Revendications

1. Système d'entraînement (10) destiné à un véhicule comprenant une ligne d'entraînement principale (15), une ligne d'entraînement auxiliaire (18) et un moteur primaire (12) comprenant un arbre d'entraînement primaire (11) qui peut être relié par une liaison d'entraînement à la ligne d'entraînement principale (15) et à la ligne d'entraînement auxiliaire (18), dans la ligne d'entraînement auxiliaire (18) étant montée une transmission planétaire (25) comportant au moins un arbre d'entraînement auxiliaire (24) relié ou pouvant être relié au moteur primaire (12), un arbre d'entraînement secondaire (27) relié ou pouvant être relié à au moins un moteur secondaire (26), et un arbre entraîné auxiliaire (28) relié ou pouvant être relié à un arbre de prise de force (19), l'arbre d'entraînement auxiliaire (24) relié ou pouvant être relié au moteur primaire (12) pouvant être freiné par au moins un premier dispositif de freinage (29),
**caractérisé en ce que**
l'arbre entraîné auxiliaire (28) peut être freiné par l'intermédiaire d'au moins un second dispositif de freinage (30), le moteur primaire (12) peut être relié par une liaison d'entraînement par l'intermédiaire d'un premier embrayage (13) avec la ligne d'entraînement principale (15) et par l'intermédiaire d'un second embrayage (14) avec la ligne d'entraînement auxiliaire (18), l'arbre d'entraînement auxiliaire (24) pouvant être relié par une liaison d'entraînement à la ligne d'entraînement principale (15) par l'intermédiaire d'au moins un troisième embrayage (32).

2. Système d'entraînement (10) conforme à la revendication 1,
**caractérisé en ce que**
le moteur secondaire (26) est formé par un moteur hydraulique (figure 1).

3. Système d'entraînement (10) conforme à la revendication 1,
**caractérisé en ce que**
le moteur secondaire (26) est formé par un moteur électrique (figure 2).

4. Système d'entraînement (10) conforme à l'une des revendications 1 à 3,
**caractérisé en ce qu'**
au moins un dispositif de freinage (29, 30) est réalisé sous la forme d'un frein de friction, de préférence d'un frein à disques.

5. Système d'entraînement (10) conforme à l'une des revendications 1 à 4,
**caractérisé en ce qu'**
au moins un dispositif de freinage (29, 30) est réalisé sous la forme d'un embrayage à griffes.

6. Système d'entraînement (10) conforme à l'une des revendications 1 à 5,
**caractérisé en ce que**
le premier embrayage et le second embrayage (13, 14) sont réalisés sous la forme d'embrayages à friction.

7. Système d'entraînement (10) conforme à l'une des revendications 1 à 6,
**caractérisé en ce que**
le troisième embrayage (32) est réalisé sous la forme d'un embrayage à griffes.

8. Procédé permettant de faire fonctionner un système d'entraînement (10) destiné à un véhicule comprenant un moteur primaire (12) comportant un arbre d'entraînement primaire (11) qui peut être relié par une liaison d'entraînement à une ligne d'entraînement principale (15) et à une ligne d'entraînement auxiliaire (18), dans la ligne d'entraînement auxiliaire (18) étant montée une transmission planétaire (25) qui comporte au moins un arbre d'entraînement auxiliaire (24) relié ou pouvant être relié au moteur primaire, un arbre d'entraînement auxiliaire (27) relié ou pouvant être relié à au moins un moteur auxiliaire (26), et un arbre entraîné auxiliaire (28) relié ou pouvant être relié à un arbre de prise de force (19),
**caractérisé en ce que**
dans au moins une première plage de fonctionnement du véhicule, l'arbre d'entraînement auxiliaire (24) de la transmission planétaire (25) est freiné et de préférence retenu par un premier dispositif de freinage (29), dans au moins une seconde plage de fonctionnement du véhicule l'arbre entraîné auxiliaire (28) de la transmission planétaire (25) est freiné et de préférence retenu par un second dispositif de freinage (30), dans au moins une plage de fonctionnement du véhicule, le moteur primaire (12) est séparé de la ligne d'entraînement principale (15) par l'intermédiaire d'un premier embrayage (13) et/ou est séparé de la ligne d'entraînement auxiliaire (18) par l'intermédiaire d'un second embrayage (14), et, dans au moins une plage de fonctionnement du véhicule, la ligne d'entraînement auxiliaire (18) est reliée à la ligne d'entraînement principale (15) par l'intermédiaire d'un troisième embrayage (32).

9. Procédé conforme à la revendication 8,
**caractérisé en ce que**
dans la seconde plage de fonctionnement le moteur primaire (12) est séparé de la ligne d'entraînement principale (15) par l'intermédiaire d'un premier embrayage (13) et/ou est séparé de la ligne d'entraînement auxiliaire (18) par l'intermédiaire d'un second embrayage (14).

10. Procédé conforme à la revendication 8 ou 9,
**caractérisé en ce que**
dans la seconde plage de fonctionnement, la ligne d'entraînement auxiliaire (18) est reliée à la ligne d'entraînement principale (15) par l'intermédiaire d'un troisième embrayage (32).
